# DEMANDE DE BREVET EUROPEEN

(11) **EP 1 172 283 A1**
(43) Date de publication de la demande: **16.01.2002**
(21) Numéro de dépôt: 01420157.8
(22) Date de dépôt: 12.07.2001
(51) Int. Cl.: B62D 25/16, B29C 45/17

(54) **Dispositif de fixation réglable pour pièces en matière plastique, notamment pour garde-boue et ailerons de véhicules**

(30) Priorité: 13.07.2000 FR 0009261
(71) Demandeur: Polyrim, 07100 Saint-Marcel les Annonay (FR)
(72) Inventeur: Fichet, Jérôme, 07100 Annonay (FR)
(74) Mandataire: Bratel, Gérard

(57) **Abrégé**

Le dispositif comporte au moins une glissière (7) prévue pour recevoir des moyens de liaison mécanique de la pièce (2) en matière plastique avec un support (4). Chaque glissière (7), intégrée à la pièce (2), est obtenue directement de moulage avec cette pièce, sous la forme d'une cavité (8) à fond plein (9) qui débouche à l'extérieur par une fente (11), et à l'intérieur de laquelle prend place une partie (13) des moyens de liaison mécanique (13 à 16) avec le support (4). La cavité (8) est obtenue par la technique d'injection de fluide sous pression, lors du moulage de la pièce (2), cette cavité (8) initialement fermée étant ensuite ouverte par découpe de la fente (11). Ce dispositif est applicable à la fixation réglable d'un garde-boue (2) en matière plastique de véhicule utilitaire sur un tube-support horizontal (4).

## Description

La présente invention concerne un dispositif de fixation réglable pour pièces en matière plastique, ce dispositif étant notamment applicable à la fixation réglable des garde-boue et ailerons de véhicules utilitaires. Cette invention vise aussi un procédé pour la fabrication industrielle d'un tel dispositif de fixation réglable.

Certains accessoires ou équipements de véhicules utilitaires, en particulier les garde-boue, nécessitent une fixation réglable par rapport à leur support, qui peut être notamment un élément de châssis du véhicule concerné.

Il existe déjà des dispositifs de fixation réglable, qui comportent des pièces en matière plastique sur lesquelles sont rapportées soit des glissières métalliques vissées, soit des glissières en matière plastique thermosoudées - voir par exemple le document DE 8708265 U. Les inconvénients de ces dispositifs sont le coût important de l'assemblage, et le coût de fabrication des pièces additionnelles.

Un autre système connu consiste à obtenir, directement de moulage, des glissières de fixation en relief ou en creux, par l'utilisation de broches mobiles dans le moule de fabrication - voir par exemple les documents EP 0752364 A et EP 0893320 A. Ce système a pour inconvénients le fait que les dispositifs de broches mobiles sont très onéreux, et le fait que de telles broches ne permettent pas d'obtenir des glissières de forme courbe.

La présente invention vise à éviter tous ces inconvénients, en fournissant un dispositif de fixation réglable, adapté à des pièces en matière plastique, qui soit de fabrication particulièrement économique et qui permette la réalisation de glissières de toutes formes.

A cet effet, l'invention a essentiellement pour objet un dispositif de fixation réglable pour pièces en matière plastique, du genre de ceux comportant au moins une glissière située dans la zone de fixation de la pièce en matière plastique à fixer, la ou les glissières étant prévues pour recevoir des moyens de liaison mécanique avec un support, le dispositif étant caractérisé par le fait que la ou chaque glissière est intégrée à la pièce en matière plastique et obtenue directement de moulage avec cette pièce, sous la forme d'une cavité allongée, à fond plein, débouchant à l'extérieur par une fente s'étendant sur tout ou partie de la longueur de ladite cavité, à l'intérieur de laquelle prend place une partie des moyens de liaison mécanique avec le support.

Selon une forme de réalisation du dispositif, la cavité est entièrement située sous la face extérieure de la pièce en matière plastique à fixer, laquelle reste parfaitement lisse de part et d'autre de la fente par laquelle la cavité débouche à l'extérieur.

Selon une autre forme de réalisation du dispositif, la cavité est située au moins partiellement sous la face extérieure de la pièce en matière plastique à fixer, et des nervures de renforcement intérieures et/ou extérieures sont prévues sur cette pièce, de part et d'autre de la fente par laquelle la cavité débouche à l'extérieur.

Avantageusement, la fente par laquelle la cavité débouche à l'extérieur comporte au moins une partie élargie, située notamment à l'une des extrémités de ladite fente, et prévue pour le passage du ou des moyens de liaison mécanique avec le support, qui prennent place à l'intérieur de la cavité.

Ces moyens de liaison mécanique peuvent être constitués d'un collier fendu ou de deux demi-colliers extérieurs, prévus pour entourer un support tubulaire, et d'une plaque prenant place à l'intérieur de la cavité, des moyens de serrage à vis étant prévus pour la liaison de la plaque avec le collier. Le serrage des moyens à vis assure à la fois le bridage du collier sur le support tubulaire, et le blocage en translation de la plaque dans la cavité, le coulissement de cette plaque (à l'état non serré) à l'intérieur de la cavité permettant un réglage sur la longueur de la glissière.

Selon un autre mode de réalisation, les moyens de liaison mécanique avec le support comportent seulement une plaque rigide montée coulissante à l'intérieur de la cavité, et munie de moyens à vis pour son bridage direct sur le support. Cette solution simple est notamment adaptée pour une fixation sur une tôle plane, ou sur un profilé ayant un rôle de support.

Un dispositif de fixation, tel que défini précédemment, est applicable plus particulièrement à la fixation de garde-boue et équipements ou accessoires analogues, tels qu'ailerons, sur des châssis de véhicules utilitaires, les glissières intégrées pouvant être réalisées avec des formes courbes ou droites selon l'équipement ou accessoire concerné et selon le mode de réglage désiré.

Ainsi, dans le cas d'un garde-boue, de forme sensiblement semi-circulaire, les glissières sont courbées selon le même rayon que le garde-boue lui-même, autorisant ainsi un réglage de la position angulaire du garde-boue autour de l'axe de la roue associée, pour ajuster par exemple un alignement avec d'autres garde-boue juxtaposés, ou pour régler la distance d'une extrémité du garde-boue par rapport au sol. Dans cette application, on utilise avantageusement les moyens de liaison mécanique avec colliers extérieurs et plaque située à l'intérieur de la cavité, moyens qui sont particulièrement adaptés à la liaison avec un tube-support horizontal, assez habituellement utilisé pour la fixation d'un garde-boue de ce genre.

Dans le cas d'un aileron, de forme non circulaire mais sensiblement plane, les glissières sont simplement rectilignes, et adaptées pour régler la position verticale de l'aileron par rapport à son support. Pour cette application, on utilise avantageusement les moyens de liaison mécanique comportant une simple plaque rigide montée à l'intérieur de la cavité, ces moyens étant suffisants pour fixer l'aileron de façon verticalement réglable à un profilé de support horizontal.

Selon un autre aspect de la présente invention, le dispositif de fixation réglable pour pièces en matière plastique, précédemment défini, est fabriqué en réalisant directement de moulage la ou les cavités, correspondant à la glissière ou aux glissières, par une technique d'injection de fluide sous pression, pendant ou après la phase de remplissage d'un moule avec la matière plastique destinée à former la pièce concernée, la ou les cavités fermées ainsi obtenues étant ensuite ouvertes sur l'extérieur, après le démoulage de la pièce, par une opération de découpe d'au moins une fente longitudinale. Le fluide injecté pour la formation de la ou des cavités peut être un gaz sous pression. Ce fluide peut aussi être de l'eau, l'injection d'eau présentant l'avantage de réduire le temps de refroidissement, avant démoulage. Le procédé consiste ainsi, dans un premier temps, à mouler la pièce avec injection de gaz sous pression, ou d'eau, afin de créer une ou des cavités fermées aux emplacements désirés pour la ou les glissières, puis dans un deuxième temps, à découper la pièce au moyen d'une fraise ou de tout autre moyen de découpe adapté aux matières plastiques, pour obtenir la ou les fentes qui seront traversées par les moyens de liaison mécanique de la pièce avec son support.

Dans l'ensemble, le procédé et le dispositif, objets de l'invention, possèdent les avantages suivants :
- la fonction « glissière » est obtenue de façon économique, puisque le dispositif ne possède pas de pièce rapportée, et que le procédé de fabrication ne nécessite pas, pour sa mise en oeuvre, un dispositif complexe tel que des broches mobiles à prévoir dans le moule ;
- le procédé proposé permet, par son principe, de réaliser des glissières droites ou en arc de cercle ou de tout autre forme ;
- les glissières peuvent être réalisées de façon non dépassante de la surface de la pièce à fixer, qui conserve ainsi un aspect extérieur lisse et un encombrement minimal. Ces glissières n'étant finalement obtenues qu'après une opération de découpe de la pièce, il reste possible de ne pas réaliser l'opération de découpe, par exemple si une glissière n'est pas utile sur un côté de la pièce, selon le sens de montage, ce qui permet de conserver un aspect entièrement lisse et fermé à l'endroit de la glissière non utilisée ;
- si des nervures sont prévues de part et d'autre de la fente, les glissières se trouvent renforcées, ce qui contribue à bien retenir la plaque logée à l'intérieur de la cavité, pour éviter le risque que cette plaque passe au travers de la fente ;
- le dispositif étant ouvert seulement vers l'extérieur, dans le cas de son application à des garde-boue ou similaires, les projections de boue venant des roues du véhicule ne peuvent, en aucun cas, atteindre et obstruer les cavités formant les glissières ;
- si la partie élargie de la fente, prévue pour le passage de la plaque appartenant aux moyens de liaison mécanique avec le support, est située à l'extrémité inférieure de la glissière, l'on obtient (toujours dans l'application du dispositif aux garde-boue et analogues) un moyen d'évacuation des eaux de ruissellement sur la face externe de la pièce en matière plastique.

De toute façon, l'invention sera mieux comprise à l'aide de la description qui suit, en référence au dessin schématique annexé représentant, à titre d'exemples, quelques formes de réalisation de ce dispositif de fixation réglable pour pièces en matière plastique, et illustrant le procédé de fabrication d'un tel dispositif :
- Figure 1 est une vue d'ensemble, en perspective, d'un garde-boue de véhicule utilitaire pourvu du dispositif de fixation réglable objet de l'invention ;
- Figure 2 est une vue en coupe transversale de ce garde-boue, suivant II-II de figure 1, la coupe étant à échelle agrandie et passant par le dispositif de fixation ;
- Figure 3 est une vue en perspective montrant le garde-boue des figures 1 et 2, fixé sur un châssis de véhicule utilitaire ;
- Figure 4 est une vue partielle en coupe, suivant IV-IV de figure 2, passant par le dispositif de fixation serré autour d'un tube-support ;
- Figure 5 est une vue en perspective, analogue à figure 4 mais illustrant l'application de l'invention à un aileron de véhicule utilitaire ;
- Figure 6 est une vue partielle en coupe, suivant VI-VI de figure 5, du dispositif de fixation de l'aileron sur un profilé de support ;
- Figure 7 est une vue en coupe schématique illustrant une première phase du procédé de fabrication du dispositif objet de l'invention ;
- Figure 8 illustre la même phase du procédé, pour une variante du dispositif ;
- Figure 9 est une vue en coupe schématique illustrant une deuxième phase du procédé, consécutive à la phase illustrée par la figure 7 ;
- Figure 10 illustre cette deuxième phase du procédé, pour la variante de la figure 8.

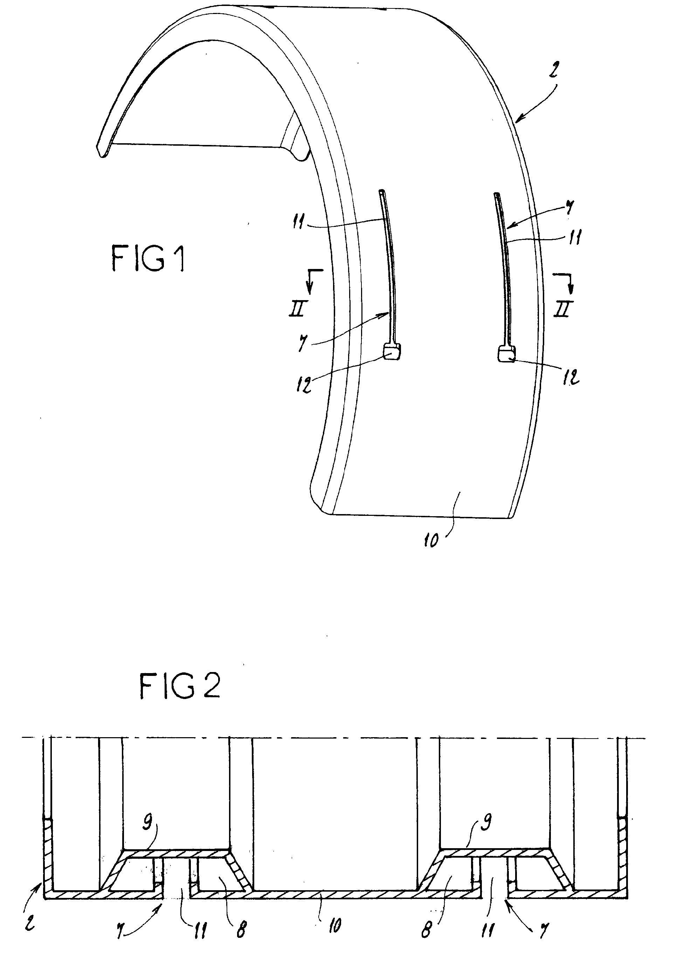

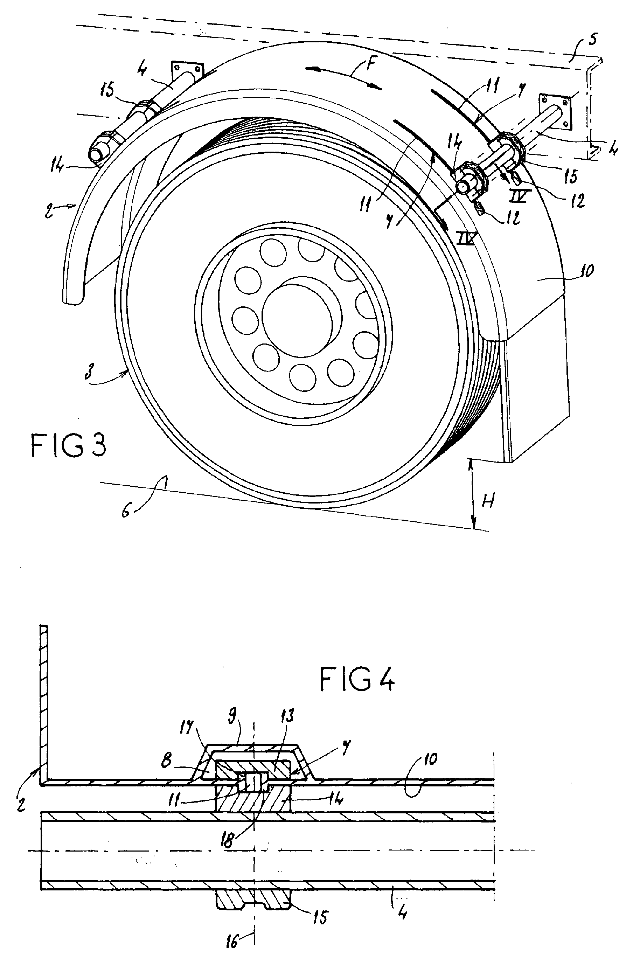

La figure 1 montre un garde-boue de véhicule utilitaire, le garde-boue étant désigné dans son ensemble par la référence 2, et possédant une forme générale semi-circulaire, lui permettant d'entourer la moitié supérieure d'une roue 3 du véhicule concerné - voir aussi figure 3. Ce garde-boue 2 est réalisé en matière plastique moulée.

De manière généralement connue, le garde-boue 2 est prévu pour être fixé sur deux tubes-supports horizontaux 4, eux-mêmes portés par un élément 5 du châssis du véhicule concerné. Le dispositif, objet de l'invention, assure une fixation réglable du garde-boue 2, plus particulièrement en offrant une possibilité de réglage en rotation du garde-boue 2 autour de l'axe de la roue 3, comme suggéré par la double flèche F de la figure 3, ce qui équivaut à rendre réglable la hauteur H d'une extrémité du garde-boue 2 par rapport au sol 6.

Le dispositif de fixation lui-même comprend, pour la fixation réglable du garde-boue 2 à l'un des tubes-supports 4, deux glissières 7 parallèles s'étendant sur la circonférence du garde-boue 2, selon un certain arc de cercle qui détermine l'amplitude du réglage angulaire possible suivant la flèche F.

Chaque glissière 7 résulte d'une cavité allongée 8, à fond plein 9, formée sous la face extérieure 10 du garde-boue 2 qui conserve ici un aspect lisse. Chaque cavité 8 débouche à l'extérieur par une fente 11, s'étendant sur tout ou partie de la longueur de cette cavité 8. A l'une de ses extrémités, chaque fente 11 comporte une partie élargie 12, prenant par exemple la forme d'une ouverture sensiblement carrée.

Chaque cavité 8 est prévue pour loger une partie de moyens de liaison mécanique avec le tube-support 4, qui traversent la fente 11 et qui forment, à l'extérieur du garde-boue 2, un collier de serrage. Dans le détail, comme le montrent les figures 3 et 4, ces moyens de liaison comprennent une plaque 13 placée et retenue à l'intérieur de la cavité 8, un demi-collier inférieur 14 appliqué contre la face extérieure 10 du garde-boue 2, et un demi-collier supérieur 15 complémentaire du demi-collier inférieur 14. La plaque 13 et les deux demi-colliers 14 et 15 sont maintenus serrés par un ou plusieurs boulons, disposés suivant un axe 16. Le serrage des boulons provoque à la fois le bridage du collier, formé des deux demi-colliers 14 et 15, sur le tube-support 4, et le blocage en translation de la plaque 13 dans la glissière 7, au point où se situe alors cette plaque 13. A l'inverse, le desserrage des boulons autorise le déplacement de la glissière 7, permettant le réglage angulaire du garde-boue 2 selon la flèche F. On notera que le desserrage des mêmes boulons permet aussi le réglage latéral du garde-boue 2, par déplacement du collier 14, 15 suivant la direction longitudinale du tube-support 4.

En se référant à la figure 4, une forme de réalisation avantageuse consiste à renforcer chaque glissière 7 par deux nervures 17 et 18, situées de part et d'autre de la fente 11, et pouvant faire saillie tant à l'intérieur de la cavité 8 qu'au-dessus de la face extérieure 10 du garde-boue 2. Dans ce cas, la plaque 13 peut comporter des formes complémentaires de celles de la glissière 7, c'est-à-dire des formes complémentaires des parties intérieures des nervures 17 et 18, afin de maintenir la plaque 13 à l'intérieur de la cavité 8, d'améliorer la résistance mécanique de la liaison, et de limiter l'effet de fluage de la matière plastique du garde-boue 2 qui est soumise, dans cette région, à de fortes contraintes.

Le demi-collier inférieur 14 possède lui aussi, avantageusement, des formes complémentaires de celles des parties extérieures des nervures 17 et 18, comme le montre encore la figure 4.

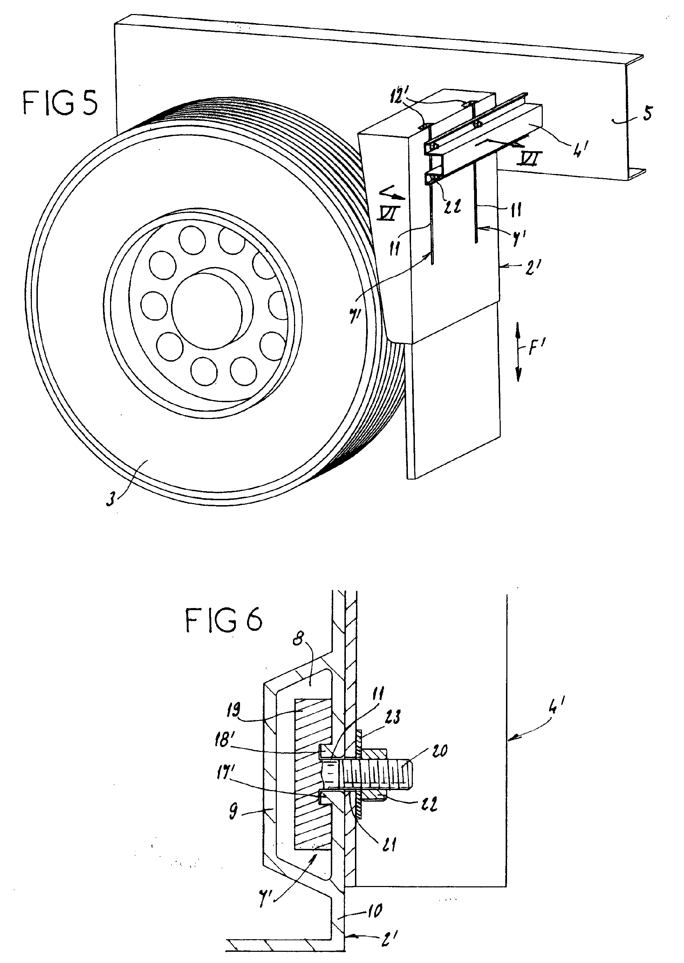

Les figures 5 et 6, sur lesquelles les éléments correspondant à ceux précédemment décrits sont désignés par les mêmes repères, illustrent l'application du dispositif de fixation réglable, objet de l'invention, à un aileron 2' de véhicule utilitaire, disposé verticalement derrière une roue 3. L'aileron 2' est fixé sur un profilé de support horizontal 4', lui-même porté par un élément 5 du châssis du véhicule concerné. Le dispositif offre ici une possibilité de réglage en translation verticale de l'aileron 2', comme suggéré par la double flèche F' de la figure 5.

L'aileron 2', réalisé en matière plastique moulée, présente deux glissières 7' parallèles, qui s'étendent de façon rectiligne et verticalement, par exemple à partir de l'extrémité supérieure de l'aileron 2' et sur une fraction de la hauteur de celui-ci. Chaque glissière 7' résulte, ici encore, d'une cavité allongée 8, à fond plein 9, laquelle débouche à l'extérieur par une fente 11. La cavité 8 est formée sous la face extérieure 10 de l'aileron 2', laquelle reste entièrement lisse et est directement appliquée contre une face du profilé de support 4'.

Les moyens de liaison mécanique entre l'aileron 2' et son profilé de support 4' sont simplifiés et comprennent, pour chaque glissière 7', une plaque rigide 19 en métal ou en matière plastique, logée à l'intérieur de la cavité 8 et pourvue d'au moins une courte tige filetée 20, qui traverse la fente 11 en direction de l'extérieur. La ou chaque tige filetée 20 traverse aussi un trou 21 ménagé dans le profilé de support 4', et elle reçoit un écrou de serrage 22 pouvant agir par l'intermédiaire d'une rondelle d'appui 23. Dans l'exemple illustré, compte tenu de la section en « oméga » du profilé de support 4', la plaque 19 comporte deux tiges filetées 20.

Chaque fente 11 débouche à l'extérieur, au sommet de l'aileron 2', par une ouverture 12' permettant l'introduction de la plaque 19 à l'intérieur de la cavité 8.

Le serrage des écrous 22 sur ces tiges filetées 20 assure le bridage de l'aileron 2' sur son profilé de support 4', avec blocage en translation de la plaque 19 dans sa position occupée relativement à la glissière 7'. A l'inverse, le desserrage des écrous 22 autorise le déplacement de la plaque 19 le long de la glissière 7', permettant le réglage vertical de l'aileron 2' selon la flèche F'.

Dans cet autre exemple également, dans la mesure où la fente 11 est encadrée par deux nervures 17' et 18' faisant saillie à l'intérieur de la cavité 8, la plaque 19 présente avantageusement des formes complémentaires de celles des nervures 17' et 18', comme le montre la figure 6.

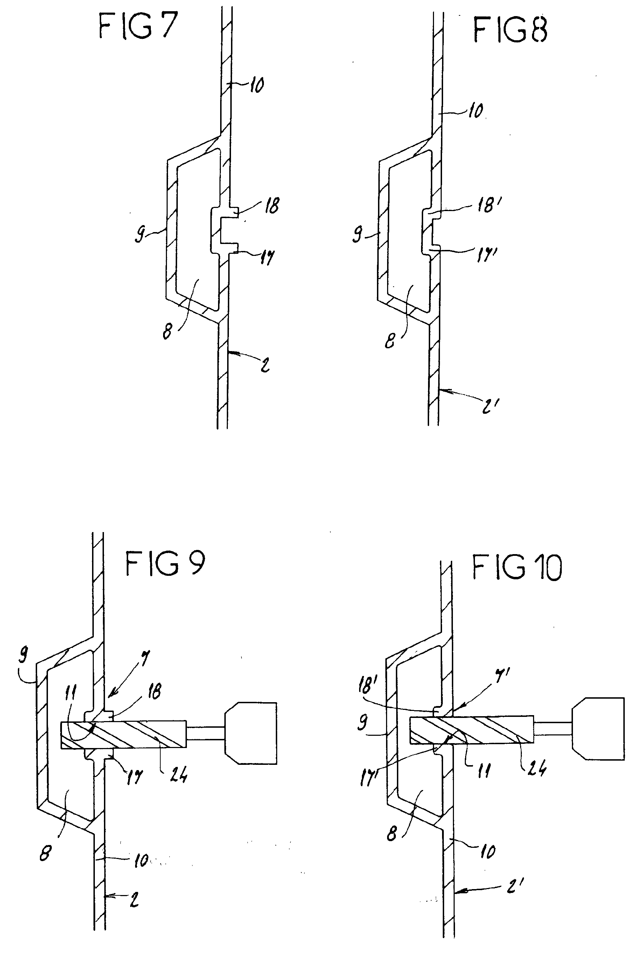

En se référant aux figures 7 et suivantes, on décrira maintenant le procédé de fabrication d'une pièce en matière plastique, telle que le garde-boue 2 ou l'aileron 2' précédemment décrits, en s'intéressant plus particulièrement aux parties de la pièce 2 ou 2' assurant sa fixation.

Dans une première opération, illustrée aux figures 7 et 8, on réalise le moulage de la pièce 2 ou 2', par injection de matière thermoplastique dans un moule, de conformation appropriée. Cette opération est accompagnée d'une injection de fluide sous pression, réalisée pendant ou après la phase de remplissage du moule avec la matière thermoplastique, afin de créer les cavités 8 aux emplacements désirés pour les glissières 7 ou 7'.

Plus particulièrement, la figure 7 illustre cette opération de moulage avec injection de fluide, tel que du gaz sous pression ou de l'eau, dans le cas d'une réalisation avec nervures 17 et 18 saillant vers l'intérieur de la cavité 8 et aussi vers l'extérieur. La figure 8 illustre la même opération de moulage, dans le cas d'une variante avec nervures 17' et 18' faisant seulement saillie à l'intérieur de la cavité 8 (voir aussi figure 6).

Ensuite, la pièce 2 ou 2' est démoulée et, dans une deuxième opération illustrée aux figures 9 et 10, il est procédé à la découpe des fentes 11 par lesquelles les cavités 8 débouchent à l'extérieur. Chaque fente 11 est réalisée entre les deux nervures 17, 18 ou 17', 18', au moyen d'une fraise 24 ou de tout autre outil de découpe, adapté à la matière plastique constitutive de la pièce 2 ou 2'.

Il peut encore être procédé à des opérations complémentaires, telles que la réalisation de la partie élargie 12 à l'extrémité de la ou chaque fente 11, cette partie élargie 12 étant prévue pour l'introduction, à l'intérieur de la cavité 8, de la plaque 13 ou 19.

L'on ne s'éloignerait pas du cadre de l'invention, telle que définie dans les revendications annexées :
- en modifiant la section des cavités, ou le détail des nervures de renforcement ;
- en modifiant le détail des moyens de liaison mécanique avec le support, par exemple en remplaçant les deux demi-colliers par un unique collier fendu ;
- en utilisant le dispositif pour une fixation sur tout genre de support, par exemple sur une simple tôle plane ayant un rôle de support ;
- en adaptant le procédé de fabrication du dispositif, par exemple en injectant d'autres fluides sous pression pour former la ou les cavités ;
- en appliquant ce dispositif de fixation réglable à toute pièce en matière plastique moulable, dans les domaines automobile ou autres, notamment mais non exclusivement pour fixer des coffres à outils, des boîtiers pour extincteurs, des coffrets divers, des panneaux latéraux de carrosserie, etc...

## Revendications

1. Dispositif de fixation réglable pour pièces en matière plastique, du genre de ceux comportant au moins une glissière (7, 7') située dans la zone de fixation de la pièce en matière plastique (2, 2') à fixer, la ou les glissières étant prévues pour recevoir des moyens de liaison mécanique avec un support (4, 4'), **caractérisé en ce que** la ou chaque glissière (7, 7') est intégrée à la pièce en matière plastique (2, 2') et obtenue directement de moulage avec cette pièce, sous la forme d'une cavité allongée (8), à fond plein (9), débouchant à l'extérieur par une fente (11) s'étendant sur tout ou partie de la longueur de la cavité (8), à l'intérieur de laquelle prend place une partie (13 ; 19) des moyens de liaison mécanique (13, 14, 15, 16 ; 19, 20, 22, 23) avec le support (4, 4').

2. Dispositif de fixation réglable selon la revendication 1, **caractérisé en ce que** la cavité (8) est entièrement située sous la face extérieure (10) de la pièce en matière plastique (2, 2') à fixer, laquelle reste parfaitement lisse de part et d'autre de la fente (11) par laquelle la cavité (8) débouche à l'extérieur.

3. Dispositif de fixation réglable selon la revendication 1, **caractérisé en ce que** la cavité (8) est située au moins partiellement sous la face extérieure (10) de la pièce en matière plastique (2, 2') à fixer et **en ce que** des nervures de renforcement intérieures et/ou extérieures (17, 18 ; 17', 18') sont prévues sur cette pièce (2, 2'), de part et d'autre de la fente (11) par laquelle la cavité (8) débouche à l'extérieur.

4. Dispositif de fixation réglable selon l'une quelconque des revendications 1 à 3, **caractérisé en ce que** la fente (11) par laquelle la cavité (8) débouche à l'extérieur comporte au moins une partie élargie (12, 12'), située notamment à l'une des extrémités de la fente (11), et prévue pour le passage du ou des moyens de liaison mécanique (13, 19) avec le support (4, 4'), qui prennent place à l'intérieur de la cavité (8).

5. Dispositif de fixation réglable selon l'une quelconque des revendications 1 à 4, **caractérisé en ce que** les moyens de liaison mécanique avec le support (4) sont constitués d'un collier fendu ou de deux demi-colliers extérieurs (14, 15), prévus pour entourer un support tubulaire (4), et d'une plaque (13) prenant place à l'intérieur de la cavité (8), des moyens de serrage à vis (16) étant prévus pour la liaison de la plaque (13) avec le collier (14, 15).

6. Dispositif de fixation réglable selon l'une quelconque des revendications 1 à 4, **caractérisé en ce que** les moyens de liaison mécanique avec le support (4') comportent une plaque rigide (19) montée coulissante à l'intérieur de la cavité (8) et munie de moyens à vis (20, 22) pour son bridage direct sur le support (4').

7. Dispositif de fixation réglable selon l'ensemble des revendications 3 et 5, ou 3 et 6, **caractérisé en ce que** la plaque (13 ou 19) et le cas échéant un demi-collier (14), faisant partie des moyens de liaison mécanique avec le support (4, 4'), possède des formes complémentaires de parties intérieures ou extérieures des nervures de renforcement (17, 18 ; 17', 18').

8. Dispositif de fixation réglable selon l'une quelconque des revendications 1 à 7, en particulier dispositif selon la revendication 5, **caractérisé par** son application à la fixation d'un garde-boue (2) de véhicule utilitaire, réalisé en matière plastique moulée, sur un tube-support horizontal (4), les glissières (7) étant courbées pour permettre le réglage (F) de la position angulaire du garde-boue (2) autour de l'axe de la roue (3) associée.

9. Dispositif de fixation réglable selon l'une quelconque des revendications 1 à 7, en particulier dispositif selon la revendication 6, **caractérisé par** son application à la fixation d'un aileron (2') de véhicule utilitaire, réalisé en matière plastique moulée, sur un profilé de support horizontal (4'), les glissières (7') étant rectilignes pour permettre le réglage de la position verticale de l'aileron (2') par rapport à son support (4').

10. Procédé de fabrication d'un dispositif de fixation réglable pour pièces en matière plastique, selon l'une quelconque des revendications 1 à 9, **caractérisé en ce qu'**on réalise directement de moulage la ou les cavités (8), correspondant à la glissière ou aux glissières (7, 7'), par une technique d'injection de fluide sous pression, pendant ou après la phase de remplissage d'un moule avec la matière plastique destinée à former la pièce (2, 2') concernée, la ou les cavités fermées (8) ainsi obtenues étant ensuite ouvertes sur l'extérieur, après le démoulage de la pièce (2, 2'), par une opération de découpe d'au moins une fente longitudinale (11).

11. Procédé selon la revendication 10, **caractérisé en ce que** le fluide injecté pour la formation de la ou des cavités (8), est un gaz sous pression.

12. Procédé selon la revendication 10, **caractérisé en ce que** le fluide injecté pour la formation de la ou des cavités (8), est de l'eau.

13. Procédé selon l'une quelconque des revendications 10 à 12, **caractérisé en ce que**, pour la réalisation de la fente (11), la pièce (2, 2') est découpée au moyen d'une fraise (24).
